# EUROPEAN PATENT SPECIFICATION

(11) **EP 0 913 056 B1**
(45) Date of publication and mention of the grant of the patent: **12.12.2001**
(21) Application number: 96926345.8
(22) Date of filing: 15.07.1996
(51) Int. Cl.: H04N 7/16

(54) **A METHOD FOR THE AUTOMATIC CONTROL OF RADIO-TELEVISION RECEIVERS**
VERFAHREN ZUR AUTOMATISCHEN STEUERUNG VON RUNDFUNK- UND FERNSEHEMPFÄNGERN
PROCEDE POUR LA COMMANDE AUTOMATIQUE DE RECEPTEURS DE RADIOTELEVISION

(43) Date of publication of application: 06.05.1999
(73) Proprietor: CASAROTTO, G. & C. S.R.L., I-45021 Badia Polesine (IT)
(72) Inventor: CASAROTTO, Giorgio, I-45021 Badia Polesine (IT)
(74) Representative: Cantaluppi, Stefano
(86) International application number: EP9603086
(87) International publication number: WO9803015

(56) References cited:
- WO-A-94/14284
- DE-U- 9 417 937

## Description

### Technical Field

The invention relates to a method for the automatic control of television and radio receiver equipment, generally referred to as radio-television equipment or receivers, comprising the steps of:
- providing a device for selectively enabling/disabling a radio-television receiver to receive radio-television programmes according to a predetermined selection,
- setting the said selection in the device,
- making the operation of the radio-television receiver subservient to the operative control of the device.

### Background art

The invention relates to the specific field of automatic control of the ability to receive radio-television programmes in order to limit the viewing thereof by children and adolescents in the absence of their parents by temporarily preventing reception of programmes which are unsuitable owing to their subject and content. The invention is also suitable for other uses such as, for example, the automatic programming of video recorder equipment and/or the control thereof (in the aforementioned sense). Devices for selectively enabling/disabling radio-television receivers are known, for example, from US patent 4,768,229. The device described in this patent has a keyboard for setting, in coded form, a predetermined selection of television programmes reception of which is to be allowed or prevented. Another similar device is described in the us patent 4.510.623.

In comparison with considerable adaptability of use, since the selection of radio-television programmes for which reception is permitted can be programmed in a completely flexible and personalized manner, these devices have the disadvantage of requiring the user to select and set the selection of the radio-television channels for which reception is permitted or prevented. In addition to the considerable difficulty of setting this selection, there is the fact that each user has to have at least an approximate knowledge of the content of the programmes selected. Moreover, there is always the doubt that the selection may be incomplete or not entirely suitable for the purposes envisaged.

A method of automatically censoring radio-television programmes according to the suitability of their content for a non-adult public is also known. for example, from Australian patent No. 9230026. This method provides for a censor who is employed to classify the programmes and to transmit a radio signal contemporaneously with the programme to be censored; the signal is received by the users and can drive an enabling/disabling device associated with each radiotelevision receiver to allow or prevent reception of that specific programme.

This method avoids the individual programming of each enabling/disabling device but, on the other hand, involves the need to organize a "censoring" network and the need, which cannot be ignored, for the radiofrequency signal emitted by the network to be receivable in a suitable manner in the location where the user is situated. A breakdown in the censoring network would also affect free viewing of any programme by all of the users.

DE-U-94 17 937 discloses a method of controlling pay-TV systems whereby a remote control is used to selectively enable/disable pay-TV channels. A data carrier containing selection information is inserted into the remote-control. The selection information is read and enables the access to either a single program channel, a set of program of channels, a number of viewing times or a limited usable time period. The document also mentions that such method could be used to deny children the access to pay-TV channels or the whole set of program channels.

The technical problem addressed by the present invention is that of providing a method for the automatic control of television and radio equipment designed to avoid all of the problems complained of with reference to the prior art.

### Disclosure of the Invention

This problem is solved by the invention by a method comprising the steps indicated in the appended claims.

### Brief Description of Drawings

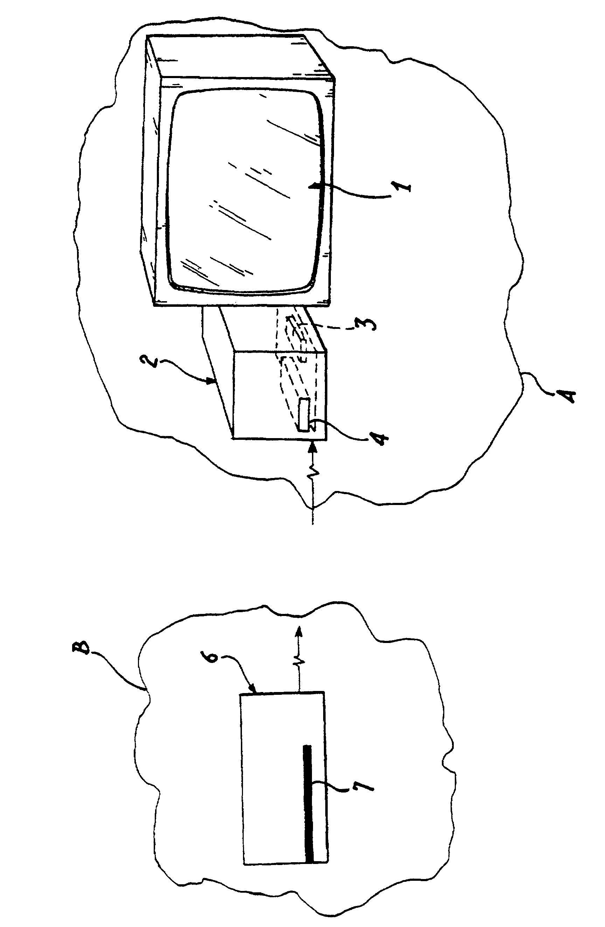

The characteristics and advantages of the invention will become clearer from the following detailed description of a preferred embodiment thereof illustrated by way of non-limiting example, with reference to the appended single drawing which shows schematically the mutual relationship of steps of the method of the invention.

### Best Mode of Carrying out the Invention

In this drawing, a television receiver, generally indicated 1, such as a television set, a video recorder or the like, is situated in a location A, typically the user's house. A device, indicated 2, selectively enables or disables the receiver 1 in order to enable it to receive only some of the television programmes which could otherwise be received, according to a predetermined selection which is programmed and stored in a memory 3 of the device 2. The enabling/disabling logic is conventional and is not a subject of the present patent. Purely by way of example, the selection of television programmes stored in coded form in the memory 3, which is preferably a non-volatile memory, drives a microprocessor which temporarily prevents tuning to the channels indicated for the duration of the television programmes of which viewing is to be prevented. The device 2, which is situated in the same location A as the television receiver, comprises a reader 4 for an informatics substrate, for example, a card 6 with a magnetic strip 7. The reader 4 may effectively be replaced by a reader for a magnetic or optical disc or for punch cards or even for a virtual disc generated in the memory 3.

According to the method of the invention, in a location B separate and remote from the location A, entities other than the user of the television set 1 and collectively indicated by the term "censor", select television programmes corresponding, for example, to the programming for the week and, in any case, preferably relating to a period of several days.

The selection comprises two or more sets of programmes, for example. divided according to the age band of the public for which each set is intended. For example, there may be a first set for children up to 10 years of age and a second set for youngsters between 10 and 15 years of age. The aforesaid selection is stored on the magnetic strips 7 of the cards 6 which can thus be distributed to several users who receive this service. In order to programme the device 2, it thus suffices to acquire the card 6 or another suitable informatics substrate containing the selection selected by the censor for the desired period of time, stored on the magnetic strip 7. At home, the user will simply have to insert the card 6 in the reader 4 and transfer the selection stored in coded form to the memory 3. The activation of the device 2 then makes the operation of the radio-television receiver subservient to the operative control of the device, thus preventing uncontrolled access by children and youngsters to programmes unsuitable for their ages.

Many modifications and variations, all falling within the same innovative concept, may be applied to the invention described; for example, the selection of programmes may be transferred from the location B to the users' devices 2 by means of data-transmission lines or telephone lines without the actual use of a physical substrate which can be transferred between the two locations. Moreover, it is also envisaged that the same function may be performed to programme, for example, a video recorder for the automatic recording of television programmes of particular interest, for example, films transmitted at unusual times, rather than for preventing the reception of programmes. A principal advantage of tile method of the invention is that it is easy to use, without the need to send out additional radio transmissions and is operative in any location. Moreover, once the card containing the desired selection has been received, the selection is operative, independently of further operations by the censor.

## Claims

1. A method for the automatic control of radio-television receivers, comprising the steps of:
- providing a device (2) for selectively enabling/disabling a radio-television receiver (1) to receive radio-television programmes according to a predetermined selection,
- setting the said selection in the device (2),
- making the operation of the radio-television receiver (1) subservient to the operative control of the device (2),
- providing the selection on a substrate (6) in a form remote from each device, and
- transferring the selection into the device by means of the substrate,
**characterized in that** the selection comprises at least one set of programs to temporarily prevent tuning of selected channels for the duration of the program.

2. A method according to Claim 1, in which the selection is transferred by the storing thereof in the device (2).

3. A method according to Claim 2, in which the storing is effected in a non-volatile memory (3).

4. A method according to Claim 1, in which the substrate is an informatics substrate.

5. A method according to Claim 4, in which the substrate includes a magnetic substrate.

6. A method according to Claim 4, in which the substrate includes an optical substrate.

7. A method according to Claim 4, in which the substrate comprises a card (6) with a magnetic strip (7) or a punched card.

8. A method according to Claim 4, in which the substrate comprises a magnetic or optical disc.

9. A method according to one or more of the preceding claims in which the selection comprises at least two sets of programmes.

10. A method according to one or more of the preceding claims in which the selection relates to a programme for several days.

## Patentansprüche

1. Verfahren zur automatischen Steuerung von Rundfunk- und Fernsehempfängern umfassend die Schritte:
Vorsehen einer Vorrichtung (2) zum selektiven Aktivieren/Desaktivieren eines Rundfunk- und Fernsehempfängers (1) zum Empfangen von Rundfunk- und Fernsehprogrammen gemäss einer bestimmten Auswahl,
Einstellen der Auswahl in der Vorrichtung (2),
Unterstellen des Betriebs des Rundfunk- und Fernsehempfängers (1) unter die Betriebssteuerung der Vorrichtung (2),
Vorsehen der Auswahl auf einem Substrat (6) in einer von jeder Vorrichtung entfernten Form, und
Übertragen der Auswahl in die Vorrichtung mittels des Substrats,
**dadurch gekennzeichnet, dass** die Auswahl mindestens einen Satz Programme umfasst, um zeitweise ein Einstellen ausgewählter Kanäle für die Dauer des Programms zu verhindern.

2. Verfahren nach Anspruch 1, bei dem die Auswahl durch Speicherung in der Vorrichtung (2) übertragen wird.

3. Verfahren nach Anspruch 2, bei dem die Speicherung in einem nichtflüchtigen Speicher (3) vorgenommen wird.

4. Verfahren nach Anspruch 1, bei dem das Substrat ein Informatiksubstrat ist.

5. Verfahren nach Anspruch 4, bei dem das Substrat ein magnetisches Substrat aufweist.

6. Verfahren nach Anspruch 4, bei dem das Substrat ein optisches Substrat aufweist.

7. Verfahren nach Anspruch 4, bei dem das Substrat eine Karte (6) mit einem Magnetstreifen (7) oder eine Lochkarte aufweist.

8. Verfahren nach Anspruch 4, bei dem das Substrat eine magnetische oder optische Platte aufweist.

9. Verfahren nach einem oder mehreren der vorhergehenden Ansprüche, bei dem die Auswahl mindestens zwei Programmsätze aufweist.

10. Verfahren nach einem oder mehreren der vorhergehenden Ansprüche, bei dem die Auswahl sich auf ein Programm für mehrere Tage bezieht.

## Revendications

1. Procédé de commande automatique de téléviseurs, comprenant les étapes consistant à :
- prévoir un dispositif (2) pour mettre en service/couper sélectivement un récepteur de radiotélévision (1) pour recevoir des programmes de radiotélévision selon une sélection prédéterminée,
- placer ladite sélection dans le dispositif (2),
- asservir le fonctionnement du récepteur de radiotélévision (1) à la commande opérationnelle du dispositif (2),
- établir la sélection sur un substrat (6) sous une forme éloignée de chaque dispositif, et
- transférer la sélection dans le dispositif au moyen du substrat,
**caractérisé en ce que** la sélection comporte au moins un ensemble de programmes pour empêcher temporairement un accord de canaux sélectionnés pour la durée du programme.

2. Procédé selon la revendication 1, dans lequel la sélection est transférée par sa mise en mémoire dans le dispositif (2).

3. Procédé selon la revendication 2, dans lequel la mise en mémoire est effectuée dans une mémoire non volatile (3).

4. Procédé selon la revendication 1, dans lequel le substrat est un substrat informatique.

5. Procédé selon la revendication 4, dans lequel le substrat comprend un substrat magnétique.

6. Procédé selon la revendication 4, dans lequel le substrat comprend un substrat optique.

7. Procédé selon la revendication 4, dans lequel le substrat comprend une carte (6) avec une piste magnétique (7) ou une carte perforée.

8. Procédé selon la revendication 4, dans lequel le substrat comporte un disque magnétique ou optique.

9. Procédé selon l'une ou plusieurs des revendications précédentes, dans lequel la sélection comporte au moins deux ensembles de programmes.

10. Procédé selon l'une ou plusieurs des revendications précédentes, dans lequel la sélection a trait à un programme pour plusieurs jours.
